# EUROPÄISCHE PATENTANMELDUNG

(11) **EP 4 524 354 A1**
(43) Veröffentlichungstag der Anmeldung: **19.03.2025**
(21) Anmeldenummer: 24194726.6
(22) Anmeldetag: 15.08.2024
(51) Int. Cl.: E05F 15/689

(54) **FENSTERHEBERBAUGRUPPE EINES KRAFTFAHRZEUGS**

(30) Priorität: 12.09.2023 DE 102023208866
(71) Anmelder: Brose Fahrzeugteile SE & Co. Kommanditgesellschaft, Bamberg, 96052 Bamberg (DE)
(72) Erfinder: HEPPNER, Matthias, 96224 Burgkunstadt (DE); MÜLLER, Jörg, 96482 Ahorn (DE); WAGNER, Mark, 96149 Breitengüßbach (DE)
(74) Vertreter: FDST Patentanwälte

(57) **Zusammenfassung**

Die Erfindung betrifft eine Fensterheberbaugruppe (16) eines Kraftfahrzeugs (2), mit einer Führungsschiene (20), an der ein Schienengleiter (24) längsbeweglich gelagert der einen Grundträger (36), der an der Führungsschiene (20) gelagert ist, und eine Klemmanordnung (54) aufweist. Die Klemmanordnung (54) umfasst einen an dem Grundträger (36) angebundenen Klemmträger (52) und eine parallel dazu angeordnete Druckplatte (62), zwischen denen eine Klemmkomponente (74) geklemmt ist. Mittels der Klemmkomponente (74) ist eine Fensterscheibe (18) gehalten, wobei die Klemmkomponente (74) eine Haltefläche (76) aufweist, die parallel zu der Druckplatte (62) angeordnet ist, und deren Abstand zu dem Klemmträger (52) einstellbar ist. Ferner betrifft die Erfindung einen Schienengleiter (24) einer Fensterheberbaugruppe (16).

## Beschreibung

Die Erfindung betrifft eine Fensterheberbaugruppe eines Kraftfahrzeugs, die einen Schienengleiter umfasst. Ferner betrifft die Erfindung einen Schienengleiter.

Kraftfahrzeuge, wie Personenkraftwagen (Pkw), weisen üblicherweise mehrere Fensterscheiben auf, die bezüglich einer Karosserie des Kraftfahrzeugs verbracht werden können. Hierfür wird üblicherweise eine Fensterheberbaugruppe herangezogen, mittels derer die Fensterscheibe, die beispielsweise einen Bestandteil der Fensterheberbaugruppe bildet oder separat hiervon ist, verbracht wird. Eine derartige Fensterheberbaugruppe ist üblicherweise in einer Fahrzeugtür angeordnet, deren Türkarosserie in der Regel ein die Außenhaut der Fahrzeugtür bildendes Türaußenteil und ein mit diesem verbundenes Innenteil als Türinnenverkleidung aufweist. Zwischen dieser und dem Türaußenteil ist ein Montageraum ausgebildet, in welchen Funktionselemente der Fahrzeugtür, und insbesondere die Fensterheberbaugruppe, aufgenommen sind. Diese umfasst meist ein auch als Trägerplatte oder Türmodulträger bezeichnetes Trägerbauteil für Komponenten eines Fensterhebers sowie gegebenenfalls für ein Türschloss, einen Airbagsensor, einen Lautsprecher und weitere Funktionselemente. Das Trägerbauteil dient zudem als sogenannte Nass-Trockenraum-Trennung und teilt den Hohlraum in eine dem Türaußenteil zugewandte Nassraumseite, in welche Feuchtigkeit über eine schlitzartige Fensteröffnung der Fahrzeugtür eindringen kann, und eine dem Türinnenteil zugewandte Trockenraumseite.

Die Fensterheberbaugruppe umfasst meist einen elektromotorischen Stellantrieb und bei einem einstrangigen Fensterheber eine einzelne Führungsschiene sowie bei einem zweistrangigen Fensterheber zwei Führungsschienen, an denen mit einer Fensterscheibe (Fahrzeugfensterscheibe) verbundene Schienengleiter oder Mitnehmer schiebbeweglich geführt sind. Diese wiederum sind über ein flexibles Zugseil mit dem Stellantrieb gekoppelt, um die Fensterscheibe entlang eines Verstellwegs zwischen einer Schließstellung und einer Offenstellung zu verfahren. Die Schienengleiter (Mitnehmer) sind in der Regel im Bereich einer Unterkante der Fensterscheibe angeordnet und dort mit dieser verbunden.

Beispielsweise ist der Fensterscheibe eine umlaufende Führung zugeordnet, die mittels eines umlaufenden Fensterrahmens bereitgestellt ist, wie dies zum Beispiel bei Limousinen der Fall ist. Es ist jedoch auch möglich, eine derartige Fensterheberbaugruppe bei einer rahmenlosen Tür zu verwenden, die zum Beispiel ein Bestandteil eines Cabrios oder eines Coupes ist. Bei einer derartigen Türe ist oberhalb des Türaußenteils keine weitere Führung für die Fensterscheibe mehr vorhanden. Damit hierbei eine dichte Anlage der Fensterscheibe an beispielsweise einem Dach des Kraftfahrzeugs erfolgt, ist eine Vorspannung erforderlich. Hierfür werden die Führungsschienen bezüglich der Vertikalen verstärkt geneigt, sodass im geschlossenen Zustand die Fensterscheibe an eine an dem Dach oder ab der Karosserie angeordnete Dichtung gepresst wird. Zum Bereitstellen der Vorspannung werden beispielsweise die etwaigen beiden Führungsschienen entsprechend geneigt. Es ist jedoch auch möglich, lediglich eine der beiden Führungsschiene entsprechend zu justieren, üblicherweise die sogenannte B-seitige, also insbesondere die auf der dem Scharnier abgewandten Seite bei einer Fahrertüre. An der in Fahrtrichtung vorderen Seite ist die Fensterscheibe in eine Führungsnut eingesetzt, die bei einem Verstellen der B-seitigen Führungsschiene als Drehachse dient.

Bei einem derartigen Vorgehen, ist es möglich, die A-seitige Führungsschiene fest zu montieren, also insbesondere eine Verstellbarkeit nicht zu gewährleisten. Auch ist es möglich, die Führungsschiene in das Türmodul zu integrieren. Somit sind Herstellungskosten verringert und eine Montage vereinfacht. Jedoch ist es möglich, dass bei Betrieb ungewollte Verspannungen der Fensterscheibe auftreten, die zu einer Beschädigung dieser oder zumindest einem erhöhten Verschleiß etwaiger Dichtungen führen kann. Auch ist, je nach Konstruktion, eine Ausbildung von Schwergängigkeiten möglich.

Der Erfindung liegt die Aufgabe zugrunde, eine besonders geeignete Fensterheberbaugruppe eines Kraftfahrzeugs sowie einen besonders geeigneten Schienengleiter einer Fensterheberbaugruppe anzugeben, wobei vorteilhafterweise ein Verschleiß verringert ist, und wobei zweckmäßigerweise das Ausbilden von Schwergängigkeiten verringert und/oder eine Montage erleichtert ist.

Hinsichtlich der Fensterheberbaugruppe wird diese Aufgabe durch die Merkmale des Anspruchs 1 und hinsichtlich des Schienengleiters durch die Merkmale des Anspruchs 10 erfindungsgemäß gelöst. Vorteilhafte Weiterbildungen und Ausgestaltungen sind Gegenstand der jeweiligen Unteransprüche.

Die Fensterheberbaugruppe ist im Montagezustand ein Bestandteil eines Kraftfahrzeugs und hierfür somit geeignet sowie vorgesehen und eingerichtet. Das Kraftfahrzeug ist insbesondere landgebunden und vorzugsweise mehrspurig ausgestaltet. Hierbei ist es geeigneterweise möglich, das Kraftfahrzeug im Wesentlichen frei zu positionieren, insbesondere auf einer Fahrbahn. Hierfür weist das Kraftfahrzeug zweckmäßigerweise entsprechende Räder auf. Zusammenfassend ist es bevorzugt möglich, das Kraftfahrzeug im Wesentlichen unabhängig von sonstigen Gegebenheiten an Land zu positionieren. Mit anderen Worten ist das Kraftfahrzeug geeigneterweise nicht schienengeführt. Vorzugsweise ist das Kraftfahrzeug ein Personenkraftwagen (Pkw) oder ein Nutzkraftwagen, wie ein Lastkraftwagen (Lkw) oder Bus.

Die Fensterheberbaugruppe dient dabei insbesondere dem Verstellen einer Fensterscheibe der Fensterheberbaugruppe bezüglich einer Karosserie des Kraftfahrzeugs. Die Fensterheberbaugruppe ist vorzugsweise ein Bestandteil einer Tür eines Kraftfahrzeugs, insbesondere einer Seitentüre. Die Tür weist beispielsweise einen Rahmen auf, mittels dessen die Fensterscheibe (zumindest im geschlossenen Zustand) umgeben ist. Bevorzugt jedoch ist die Tür rahmenlos ausgestaltet, und im geschlossenen Zustand, insbesondere der Türe sowie der Fensterscheibe, liegt die Fensterscheibe randseitig zumindest teilweise an einem Dach des Kraftfahrzeugs an, das beispielsweise starr ausgestaltet ist oder verstellt werden kann, also insbesondere ein Cabriodach oder ein Coupedach ist.

Die Fensterheberbaugruppe weist eine Führungsschiene auf. Die Führungsschiene ist beispielsweise aus einem Aluminium oder einem Stahl erstellt. An der Führungsschiene ist ein Schienengleiter längsbeweglich gelagert, und die Führungsschiene dient insbesondere der schiebebeweglichen Führung des Schienengleiters. Zumindest ist die Führungsschiene geeignet, insbesondere vorgesehen und eingerichtet, den Schienengleiter zu führen. Im Montagezustand ist die Führungsschiene zweckmäßigerweise starr an einem zugeordneten Bauteil, wie einem Türmodul oder einem Türrohbau/Türkarosserie, befestigt.

Der Schienengleiter umfasst einen Grundträger, der an der Führungsschiene gelagert ist. Insbesondere umfassen die Führungsschiene und der Schienengleiter ineinandergreifende Strukturen, sodass lediglich eine Bewegung des Schienengleiters in einer Längsrichtung der Führungsschiene ermöglicht ist. Vorzugsweise ist dabei die Führungsschiene zumindest randseitig L-förmig geformt, und in eine entsprechende L-förmige Ausnahme der Grundträgers eingesetzt. Hierbei ist der Grundträger beispielsweise einstückig oder weist vorzugsweise einen Körper auf, der beispielsweise aus einem Metall oder Kunststoff gefertigt ist. Der Körper wiederum weist eine Aufnahme auf, in die ein Clip eingesetzt ist, mittels dessen die Führungsschiene umgeben ist. Der Clip ist insbesondere aus einem Kunststoff gefertigt, wie POM oder PTFE. Somit ist eine Ausbildung einer übermäßigen Reibung vermieden. Auch ist auf diese Weise eine Anpassung an unterschiedliche Führungsscheinen ermöglicht. Unabhängig von der Ausgestaltung des Grundträgers ist dieser zweckmäßigerweise rotationssteif an der Führungsschiene gelagert.

Der Schienengleiter umfasst vorzugsweise eine Seilanhängung, die auch als Nippelkammer bezeichnet ist. Mittels der Seilanhängung ist, zumindest im Montagezustand, ein Seil gehalten. Das Seil ist insbesondere aus einem Draht oder Kunststoff gefertigt. Beispielsweise ist das Seil in der Nippelkammer geklemmt, vorzugsweise mittels einer Klemmung. Alternativ oder in Kombination hierzu ist beispielsweise an dem Seil, insbesondere endseitig, eine oder mehrere Hülsen oder dergleichen aufgesetzt und dort zum Beispiel verpresst. Die Seilanhängung weist dabei eine entsprechende Kammer auf, in die die Hülse eingesetzt ist, wobei insbesondere ein Entfernen der Hülse aus der Kammer lediglich mittels einer Bewegung senkrecht zum Verlauf des Seils möglich ist. Aufgrund der Seilanhängung wird, wenn an dem Seil parallel zu der Führungsschiene gezogen wird, der Schienengleiter parallel zur Führungsschiene bewegt. Vorzugsweise sind an der Führungsschiene eine oder mehrere Umlenkrollen gelagert, mittels derer das Seil oder dergleichen geführt wird, das an dem Schienengleiter gehalten ist. Mittels dieser ist somit sichergestellt, dass das Seil im Wesentlichen parallel zur Führungsschiene im Bereich des Schienengleiters verläuft

Der Schienengleiter umfasst ferner eine Klemmanordnung, die einen Klemmträger und eine dazu parallel angeordnete Druckplatte aufweist. Der Klemmträger und die Druckplatte sind hierbei insbesondere zueinander verstellbar ausgestaltet und vorzugsweise mittels einer Klemmschraube aneinander befestigt. Hierbei wird insbesondere mittels der Klemmschraube ein maximaler Abstand des Klemmträgers zu der Druckplatte vorgegeben. Zwischen den Klemmträger und die Druckplatte ist eine Klemmkomponente geklemmt. Mittels der Klemmkomponente wiederum ist die Fensterscheibe gehalten. Hierbei ist insbesondere der Klemmträger im Wesentlichen parallel zum Grundträger angeordnet. Der Klemmträger befindet sich insbesondere zwischen der Druckplatte und dem Grundträger. Somit ist eine Erreichbarkeit der Druckplatte geben. Vorzugsweise ist die Klemmschraube durch die Druckplatte geführt und in den Klemmträger eingedreht. Mittels Rotation der Klemmschraube wird insbesondere die Druckplatte auf den Klemmträger hinbewegt / von diesem beabstandet oder zumindest der maximale Abstand zwischen diesen vorgegeben.

Die Klemmkomponente weist eine Haltefläche auf, die parallel zur Druckplatte angeordnet ist. Somit ist auch die Haltefläche parallel zu dem Klemmträger angeordnet. Die Haltefläche ist hierbei insbesondere zwischen der Druckplatte und dem Klemmträger angeordnet und wird insbesondere mittels dieser geklemmt.

Beispielsweise liegt die Haltefläche mechanisch direkt an der Fensterscheibe an. Somit wird mittels der Haltefläche auch die Fensterscheibe geklemmt, die dabei insbesondere zumindest teilweise zwischen der Druckplatte und dem Klemmträger angeordnet ist. Insbesondere ist dabei die Fensterscheibe zwischen der Haltefläche und dem Klemmträger oder besonders bevorzugt zwischen der Haltefläche und der Druckplatte angeordnet. Vorzugsweise ist hierbei die Haltefläche aus einem Kunststoff oder Gummi erstellt, sodass eine mechanische Belastung der Fensterscheibe verringert ist.

Alternativ hierzu umfasst beispielsweise die Klemmkomponente zusätzlich ein gabelförmiges Halteelement, das mittels der Haltefläche gehalten ist. Hierbei ist das Halteelemente beispielsweise an der Haltefläche befestigt, oder wird mittels dieser insbesondere geklemmt. Das Halteelement ist insbesondere gabelförmig und weist vorzugsweise eine Aufnahme auf, die im Montagezustand in vertikaler Richtung oberhalb der Druckplatte und/oder des Klemmträger angeordnet ist. Mittels der Aufnahme ist ein Rand der Fensterscheibe umgriffen ist, die insbesondere eine Verbundglasscheibe ist.

Mittels der Haltefläche wird, zumindest implizit, die Position der Fensterscheibe bezüglich des Grundträgers und somit auch der der Führungsschiene vorgegeben. Der Abstand der Haltefläche zu dem Klemmträger ist einstellbar. Mit anderen Worten ist der Abstand variabel. Hierbei ergibt sich beispielsweise der Abstand selbstständig aufgrund einer Konfiguration des Schienengleiters und/oder der Fensterheberbaugruppe. Alternativ hierzu ist es vorzugsweise möglich, den Abstand zu fixieren, jedoch insbesondere in unterschiedlichen Positionen. Da der Abstand der Haltefläche zu dem Klemmträger einstellbar ist, ist es möglich, diesen auf die Position der Fensterscheibe anzupassen, wobei ein Anpassen der Führungsschiene nicht erforderlich ist. Wegen des Anpassens ist ein Ausbilden von Verspannungen der Fensterscheibe vermieden. Auch wird diese insbesondere nicht elastisch verformt, sodass diese nicht übermäßig an eine etwaige Dichtung oder dergleichen angepresst wird, was eine Reibung und einen Verschleiß verringert. Auch ist ein Ausbilden von aufgrund der Verspannungen der Fensterscheibe hervorgerufenen Schwergängigkeiten vermieden, die beispielsweise zu einem fehlerhaften

Aktivieren eines Einklemmschutzes führen könnten. Somit ist auch ein Komfort und ein e Zuverlässigkeit erhöht. Auch ist es möglich, die Führungsschiene und auch die Fensterscheibe stets in gleicher Art und Weise montieren, und dort keine Verstellbarkeit vorzusehen. Somit sind dort Materialkosten verringert und eine Prozessgeschwindigkeit bei der Montage erhöht.

Ferner ist es möglich, mittels der Haltefläche die Position der Fensterscheibe bezüglich des Klemmträgers und somit auch bezüglich der Führungsschiene zu verändern. Infolgedessen ist es auch möglich, mittels der Haltefläche einen Anpressdruck der Fensterscheibe im geschlossenen Zustand an eine etwaige Dichtung zu verändern, ohne dass es hierfür erforderlich ist, die Führungsschiene sowie deren Befestigung anzupassen. Somit ist eine Nachjustage erleichtert.

Beispielsweise umfasst die Fensterheberbaugruppe lediglich die eine Führungsschiene. Besonders bevorzugt jedoch umfasst die Fensterheberbaugruppe eine zweite Führungsschiene, an der ein zweiter Schienengleiter längsbeweglich gelagert ist, mittels dessen die Fensterscheibe auch gehalten ist, insbesondere über eine entsprechende zugeordnete Klemmkomponente. Mittels des zweiten Schienengleiters ist dabei insbesondere ebenfalls das Seil gehalten.

Beispielsweise sind die beiden Schienengleiter baugleich, sodass Gleichteile verwendet werden können, was Herstellungskosten reduziert. Beispielsweise ist der dabei im Montagezustand die zweite Führungsschiene starr an dem zugeordneten Bauteil, wie einem Türmodul oder einem Türrohbau/Türkarosserie, befestigt oder in dieses integriert. Alternativ hierzu ist diese daran verstellbar befestigt. Mittels Einstellung der zweiten Führungsschiene ist es dabei vorzugweise möglich, eine Vorspannung der Fensterscheibe bezüglich einer etwaigen Dichtung einzustellen, die zum Beispiel im Bereich eines Dachs des Kraftfahrzeugs angeordnet ist. Der sich ergebende Versatz im Bereich der Führungsschiene kann dabei mittels entsprechender Positionierung der Haltefläche ausgeglichen werden, wobei eine Einstellung der zugeordneten Führungsschiene nicht erforderlich ist. Somit ist eine Montage/Wartung/Justage erleichtert. Zusammenfassend ist es möglich, mittels lediglich der Justage einer der Führungsschienen, nämlich der zweiten Führungsschiene, die Vorspannung einzustellen, wobei bei der verbleibenden Führungsschiene, die die einstellbare Haltefläche aufweist, die Anpassung der auf die verstellte Fensterscheibe erfolgt. Geeigneterweise ist die zweite Führungsschiene hierbei einer B-Säule zugeordnet, wohingegen die Führungsschiene, der der Schienengleiter mit der einstellbaren Haltefläche zugeordnet ist, einer A-Säule des Kraftfahrzeugs zugeordnet ist.

Vorzugsweise umfasst die Fensterheberbaugruppe eine Führungsnut, die parallel zur Führungsschiene angeordnet ist, und mittels derer randseitig die Fensterscheibe umgriffen ist. Hierbei wird bei Bewegen der Fensterscheibe, insbesondere bei Bewegen des Schienengleiters entlang der Führungsschiene, die Fensterscheibe innerhalb der Führungsnut bewegt.

Beispielsweise umfasst die Fensterheberbaugruppe zudem einen Stellantrieb, mittels dessen das, um die etwaige Umlenkrollen geführte, Seil angetrieben ist. Der Stellantrieb umfasst vorzugsweise einen Elektromotor, mittels dessen beispielsweise ein Getriebe, wie ein Schneckenradgetriebe, angetrieben ist. Mittels des Getriebes, oder zumindest des Elektromotors, ist vorzugsweise eine Seiltrommel angetrieben, um die das Seil geschlungen ist. Somit wird bei Betrieb des Stellantriebs die Fensterscheibe verstellt.

Beispielsweise ist die Haltefläche lose bezüglich des Klemmträgers und/oder der Druckplatte. Besonders bevorzugt jedoch ist die Haltefläche an der Klemmanordnung gelagert. Somit ist ein Ablösen der Haltefläche von der Klemmanordnung vermieden, was eine Robustheit erhöht und eine Montage, insbesondere der Fensterscheibe, erleichtert. Beispielsweise ist die Haltefläche an der Druckplatte gelagert. Besonders bevorzugt jedoch ist die Haltefläche an dem Klemmträger gelagert. Infolgedessen ist absehbar, an welcher Position sich die Fensterscheibe bezüglich des Klemmträgers befindet, auch wenn diese und/oder die Druckplatte noch nicht montiert sind. Auch ist es auf diese Weise insbesondere möglich, die Haltefläche und den Klemmträger als ein Modul auszubilden, was die Montage erleichtert.

Beispielsweise wird zum Einstellen des Abstands die Haltefläche mit dem Klemmträger stoffschlüssig verbunden, beispielsweise verklebt oder verschweißt. Besonders bevorzugt jedoch ist die Haltefläche bezüglich des Klemmträgers beweglich gelagert. Geeigneterweise weist dabei der Schienengleiter eine Einstellschraube auf, mittels derer insbesondere der Abstand eingestellt werden kann. Die Einstellschraube wirkt dabei auf die Haltefläche. Somit ist es insbesondere möglich, mittels Drehens der Einstellschraube den Abstand einzustellen. Beispielsweise wird mittels der Einstellschraube die Haltefläche an den Klemmträger geklemmt, oder die Einstellschraube liegt endseitig an der Haltefläche an und ist zum Beispiel in den Klemmträger eingedreht. Aufgrund der Einstellschraube ist eine vergleichsweise feine Einstellung des Abstands möglich, also eine Feinjustage, wobei auch eine nachträgliche Änderung und/oder Anpassung ermöglicht ist. Auch ist hierfür kein Spezialwerkzeug erforderlich.

Besonders bevorzugt umfasst der Schienengleiter ein Winkelgetriebe, das die Einstellschraube aufweist. Hierbei ist die Einstellschraube parallel zu dem Klemmträger angeordnet, und mittels des Winkelträgers erfolgt insbesondere eine Krafteinwirkung auf die Haltefläche. Somit wird mittels Drehens der Einstellschraube über das Winkelgetriebe, das beispielsweise ein 90°-Getriebe ist, eine Kraft auf die Haltefläche ausgeübt, sodass diese bezüglich des Klemmträger verstellt wird. Beispielsweise ist das Winkelgetriebe selbsthemmend ausgestaltet, sodass die Haltefläche stabilisiert ist, wenn keine Drehung der Einstellschraube erfolgt. Somit ist die Position der Haltefläche vergleichsweise stabil, auch wenn die Fensterscheibe noch nicht montiert ist. Zweckmäßigerweise befindet sich die Einstellschraube zwischen dem Klemmträger und dem Grundträger, sodass diese geschützt ist. Aufgrund der parallelen Anordnung ist dabei dennoch eine nachträgliche Bedienung dieser und somit eine Veränderung der Position der Haltefläche ermöglicht. Zusammenfassend ist eine Bedienung der Einstellschraube auch möglich, wenn der Klemmträger an dem Grundträger angeordnet ist und/oder die Fensterscheiben bereits montiert ist.

Beispielsweise ist an die Haltefläche ein oder mehrere Zapfen oder dergleichen angebunden, der in eine entsprechende Aufnahme des Klemmträger eingesetzt ist. Der Zapfen und/oder die Aufnahmen verlaufen dabei beispielsweise im Wesentlichen senkrecht zu dem Klemmträger und der Haltefläche. Besonders bevorzugt jedoch umfasst der Klemmträger mehrere Führungsschlitze, in die jeweils ein an der Haltefläche angebundener Lagerflügel eingesetzt ist. Die Führungsschlitze und/oder die Lagerflügel sind dabei vorzugsweise zueinander baugleich. Die Lagerflügel sind zweckmäßigerweise im Wesentlichen L-förmig, wobei die Haltefläche aufgrund der L-Form von dem Klemmträger weg versetzt ist. Die Ausdehnung jedes Lagerflügels in dem zugeordneten Führungsschlitz ist dabei geringer als die Länge des jeweiligen Führungsschlitzes. Somit ist es möglich, die Lagerflügel in den Führungsschlitzen zu verschieben, und somit auch die Haltefläche bezüglich des Klemmträgers. Vorzugsweise umfasst der Klemmträger hierbei vier Führungsschlitze, und an der Haltefläche sind somit vier entsprechende Lagerflügel angebunden. Geeigneterweise sind die Lagerflügel an der Haltefläche angeformt, und somit einstückig mit dieser, was eine Herstellung erleichtert. Insbesondere weisen die Lagerflügeln endseitig eine Rastnase oder einen Clip auf, oder diese sind endseitig daran angebunden. Mittels dieser ist jeder Lagerflügel mit dem zugeordneten Führungsschlitz verrastet, sodass ein Entfernen lediglich mittels Verformung der Clipse bzw. der Rastnase ermöglicht ist.

Die Führungsschlitze sind bezüglich der Haltefläche geneigt und sind daher auch bezüglich des Klemmträgers geneigt. Mit anderen Worten ist zwischen jedem Führungsschlitz und der Halterfläche ein Winkel gebildet, der verschieden von 90° und 0° ist. Geeigneterweise ist zwischen diesen ein Winkel zwischen 5° und 30° gebildet. Infolgedessen ist es möglich, die Haltefläche schräg bezüglich des Klemmträgers zu verschieben und somit den Abstand dieser zueinander einzustellen. Hierbei sind sämtliche Führungsschlitze und auch die entsprechenden Lagerflügel geeigneterweise um den gleichen Winkel geneigt.

Aufgrund der schrägen Verschieblichkeit des Haltefläche bezüglich des Klemmträgers wirkt die Klemmkraft, die mittels der Druckplatte und des Klemmträgers sowie gegebenenfalls der Klemmschraube bereitgestellt wird, nicht lediglich in die Richtung, in die die Haltefläche bezüglich des Klemmträgers verschoben werden kann. Somit ist eine erforderliche Robustheit der Haltefläche sowie der Lagerung an dem Klemmträger verringert. Auch ist, sofern die Einstellschraube und/oder das Winkelgetriebe vorhanden ist, eine darauf aufgrund der Klemmung wirkende Kraft verringert, sodass deren erforderliche Robustheit ebenfalls verringert ist, wobei dennoch ein ungewolltes Verstellen der Haltefläche bezüglich des Klemmträgers vermieden ist.

Beispielsweise ist die Fensterscheibe oder das etwaige Halteelement zwischen die Haltefläche und die Druckplatte geklemmt. Besonders bevorzugt jedoch ist an der Druckplatte eine zweite Haltefläche der Klemmkomponente angebunden. Die zweite Haltefläche ist bevorzugt aus einem Kunststoff und/oder Gummi erstellt, sodass eine Beschädigung der zwischen den beiden Hallhaltflächen angeordneten Bauteile vermieden ist, wobei dennoch mittels der Klemmanordnung eine vergleichsweise hohe Klemmkraft aufgebracht werden kann.

Beispielsweise ist die zweite Haltefläche starr an der Druckplatte befestigt. Alternativ hierzu ist die zweite Haltefläche an der Druckplatte gelagert, sodass insbesondere auch ein Abstand der zweiten Haltefläche bezüglich der Druckplatte veränderbar ist. Hierbei ist es beispielsweise möglich, diesen ebenfalls einzustellen, oder dieser ergibt sich vorzugsweise aufgrund einer Einstellung des Abstands der Haltefläche zu dem Klemmträger. Vorzugsweise sind die beiden Haltefläche zueinander baugleich, weswegen Gleichteile verwendet werden können. Zweckmäßigerweise ist hierbei die zweite Haltefläche mittels entsprechender Führungsschlitze der Druckplatte gelagert, wobei diese insbesondere parallel zu den etwaigen Führungsschlitzen des Klemmträger sind. Insbesondere sind hierfür an der zweiten Haltefläche entsprechende Lagerflügel angebunden.

Beispielsweise ist die Klemmanordnung starr an dem Grundträger befestigt, und vorzugsweise ist der Klemmträger einstückig mit dem Grundträger und somit an diesen angeformt. Infolgedessen ist eine Herstellung erleichtert. Alternativ hierzu ist die Klemmanordnung bezüglich des Grundträgers verstellbar gelagert. Mit anderen Worten ist es möglich, die Klemmanordnung bezüglich des Grundträgers zu verstellen, beispielsweise einmalig bei Montage, mehrmalig, insbesondere im Rahmen eines Werkstattaufenthalts, oder vorzugsweise auch bei Betrieb.

Insbesondere ist dabei die Klemmanordnung im Wesentlichen selbsteinstellend ausgebildet. Hierbei ist es insbesondere möglich, die Klemmanordnung bezüglich des Grundträgers transversal und/oder rotatorisch zu verstellen. Aufgrund der Verstellbarkeit der Klemmanordnung ist es zusätzlich möglich, diese auf die Position und/oder Orientierung der Fensterscheibe anzupassen, was Verspannungen der Fensterscheibe weiter reduziert. So wird hierbei beispielsweise ein Versatz ausgeglichen, der mittels lediglich Einstellens des Abstands nicht ausgleichbar ist. Auch erfolgt beispielsweise mittels Einstellens des Abstands eine Feinjustage, wohingegen mittels der Verstellung der Klemmanordnung bezüglich des Grundträgers eine im Verglich dazu grobe Einstellung erfolgt.

Beispielsweise ist der Grundträger bezüglich der Seilanhängung ebenfalls verstellbar. Hierbei ist es insbesondere möglich, den Grundträger bezüglich der Seilanhängung parallel zu der Führungsschiene zu verstellen. Somit ist es möglich, Toleranzen des Seils und/oder der Position der etwaigen Hülse und/oder beispielsweise eine Längung des Seils aufgrund des Betriebs auszugleichen. Mit anderen Worten ist eine Nachjustage dort ebenfalls ermöglicht, sodass im Wesentlichen über die vollständige Lebensdauer der Fensterheberbaugruppe stets das gleiche Seil verwendet werden kann.

Alternativ hierzu ist der Grundträger starr an der Seilanhängung befestigt. Somit ist eine Robustheit erhöht. Vorzugsweise weist dabei der Schienengleiter eine Gewindespindel auf, mittels derer die Klemmanordnung an dem Grundträger gelagert ist. Die Gewindespindel verläuft hierbei parallel zu der Führungsschiene, und mittels dieser ist es möglich, die Klemmanordnung bezüglich des Grundträgers parallel zu der Führungsschiene, zumindest in bestimmten Grenzen, zu verstellen. Beispielsweise ist dabei auf die Gewindespindel eine Spindelmutter aufgesetzt, die zum Beispiel starr an dem Grundträger oder der Klemmanordnung befestigt oder dort drehbar gelagert ist. An dem jeweils anderen Bauteil ist die Gewindespindel drehbar gelagert. Somit wird bei Rotation der Gewindestange die Klemmanordnung bezüglich des Grundträgers verstellt. Aufgrund der Gewindespindel ist somit eine Verstellbarkeit und eine vergleichsweise genaue Justage ermöglicht, wobei kein Spezialwerkzeug erforderlich ist. Mittels dieser Einstellung ist es somit möglich, die Fensterscheibe parallel zur Führungsschiene zu verschieben und etwaige Toleranzen auszugleichen. Dies erfolgt im Rahmen einer Justage, und die Position des Seils wird dabei nicht verändert.

Zum Beispiel ist hierbei die Verstellbarkeit der Klemmanordnung bezüglich des Grundträgers mittels der Gewindespindel realisiert. Aufgrund der starren Verbindung des Grundträgers mit der Seilanhängung ist es somit nicht möglich, diese zueinander zu verstellen, weswegen die Position des Grundträgers an der Führungsschiene, insbesondere bezüglich deren Enden, lediglich mittels des Seils vorgegeben ist und nicht verändert werden kann. Somit ist es nicht erforderlich, die Führungsschiene verlängert auszugestalten, um die Justage/Einstellung zu ermöglichen. Vielmehr erfolgt dies mittels der Klemmanordnung, die beispielsweise endseitig über die Führungsschiene überstehen kann. Folglich ist es möglich, die Führungsschiene verkürzt auszugestalten. Auch befindet sich vorzugsweise die Gewindespindel und die Seilanhängung auf gegenüberliegenden Seiten bezüglich der Führungsschiene. Infolgedessen ist ein vergleichsweise kompakter Schienengleiter bereitgestellt, und etwaige auf die Führungsschiene/den Schienengleiter wirkende Kippmomente sind reduziert. Somit ist eine Robustheit erhöht, und es ist möglich, die etwaigen ineinandergreifenden Strukturen des Schienengleiters und der Führungsschiene verkürzt auszugestalten.

Alternativ oder in Kombination zu der transversalen Verstellbarkeit ist die Klemmanordnung drehbar um eine Drehachse an dem Grundträger gelagert. Die Drehachse verläuft dabei zweckmäßigerweise parallel zu der Führungsschiene. Aufgrund der drehbaren Lagerung wird insbesondere ein etwaiger Winkel, den die Fensterscheibe bezüglich des Grundträgers aufweist, zumindest teilweise ausgeglichen. Insbesondere ist aufgrund der Drehbarkeit möglich, die Haltefläche, die Druckplatte und/oder den Klemmträger parallel zur Fensterscheibe anzuordnen. Somit wird eine ungewollte Verspannung der Fensterscheibe und/oder lediglich eine punktuelle Einspannung vermieden. Insbesondere sofern die zweite Führungsschiene vorhanden ist, ist es somit möglich, diese vergleichsweise weit gegenüber der Vertikalen zu neigen bzw. einer Längsachse des Kraftfahrzeugs zu versetzen. Zweckmäßigerweise ist hierbei die Führungsnut vorhanden, mittels derer die Fensterscheibe endseitig umgriffen ist.

Zum Beispiel wird die Position der Klemmanordnung, insbesondere der Winkel, den diese bezüglich des Grundträgers aufweist, voreingestellt, und ist geeigneterweise vorgegeben. Besonders bevorzugt jedoch ist die Klemmanordnung lediglich lose an dem Grundträger gelagert. Auf diese Weise erfolgt eine selbstständige Einstellung des Winkels zwischen der Klemmanordnung und dem Grundträger, was eine Montage vereinfacht. Dabei ist bei Verschieben des Schienengleiters entlang der Fensterscheibe die Höhe der Fensterscheibe entlang der Führungsschiene dennoch stets anhand des Grundträgers vorgegeben, weswegen sich aufgrund der losen Lagerung kein Versatz der Fensterscheibe oder ein Verkanten ergibt.

Besonders bevorzugt weist der Schienengleiter eine Einstellschraube auf, die an der Klemmanordnung angebunden ist. Hierbei ist die Einstellschraube insbesondere durch die Klemmanordnung hindurchgeführt. Zum Beispiel ist die Einstellschraube ein separates Bauteil. Alternativ hierzu ist die Einstellschraube beispielsweise mittels der Klemmschraube gebildet, mittels derer die Druckplatte mit dem Klemmträger verbunden ist. Die Einstellschraube steht auf der dem Grundträger zugewandten Seite über die Klemmanordnung, oder zumindest den Klemmträger oder die Druckplatte, über. Die Einstellschraube ist dabei derart ausgebildet und angeordnet, insbesondere eingedreht, dass diese endseitig an dem Grundträger abgestützt ist. Somit wird mittels der Einstellschraube die (lose) Verstellbarkeit der Klemmanordnung bezüglich des Grundträgers einseitig beschränkt.

Beispielsweise umfasst der Schienengleiter ein Scharnier, mittels dessen die Klemmanordnung an dem Grundträger angebunden ist. Hierbei ist die Drehachse insbesondere auf der der Führungsschiene und/oder der Seilanhängung abgewandten Ende des Grundträgers angeordnet. Somit erfolgt bei einem Drehen der Klemmanordnung um die Drehachse auch ein Beabstanden der Fensterscheibe von der Führungsschiene, sodass zusätzlich zum Winkelausgleich auch, zumindest in geringem Maße oder zumindest abhängig von dem jeweiligen Winkel, ein Abstand der Fensterscheibe zu der Führungsschiene eingestellt wird. Beispielsweise ist hierbei der Grundträger starr an der Seilanhängung befestigt, oder der Grundträger ist bezüglich der Seilanhängung parallel zur Führungsschiene verstellbar. Mittels der Einstellung des Abstands der Haltefläche zu dem Klemmträger ist dies beispielsweise kompensierbar, sodass der Abstand der Fensterscheibe zu der Führungsschiene sowie der Winkel der Fensterscheibe zu der Führungsschiene im Wesentlichen frei gewählt werden kann.

Alternativ hierzu ist die Klemmanordnung mittels der Gewindespindel drehbar um die Drehachse gelagert. Hierbei ist die Gewindespindel zweckmäßigerweise konzentrisch zur Drehachse angeordnet. Vorzugsweise ist in diesem Fall der Grundträger starr an der Seilanhängung befestigt, und mittels der Gewindespindel wird somit insbesondere der Versatz der Klemmanordnung zu dem Grundträger parallel zur Führungsschiene eingestellt, nämlich mittels Rotation der Gewindespindel. Hierbei weist die Klemmanordnung, vorzugsweise der Klemmträger, eine Einlage auf, mittels dessen die Gewindespindel oder die etwaige Gewindemutter zumindest teilweise drehbar gelagert ist, jedoch in einer Richtung parallel zur Führungsschiene, festgehalten ist. Aufgrund der Verwendung der Gewindespindel zur drehbaren Lagerung ist die Anzahl an benötigten Bauteilen reduziert, weswegen ein Gewicht und Herstellungskosten des Schienengleiters verringert sind. Auch ist die Gewindespindel vergleichsweise nahe an der Führungsschiene angeordnet, sodass ein Verkippen des Schienengleiters bezüglich der Führungsschiene vermieden ist.

Bei einer anderen Ausgestaltungsform ist die Klemmanordnung mittels eines Kugelgelenks schwenkbar an dem Grundträger gelagert. Das Kugelgelenk weist dabei eine Kugel auf, die mittels einer Kugelpfanne umgeben ist. Vorzugsweise ist hierbei eine unlösbare Verbindung der Kugelpfanne mit der Kugel gegeben, sodass eine Robustheit erhöht ist. Mittels des Kugelgelenks ist es möglich, die Klemmanordnung bezüglich des Grundträgers um zwei zueinander senkrechte Achsen zu verschwenken. Vorzugsweise sind hierbei Anschläge oder dergleichen vorhanden, sodass ein maximaler Winkel, um den die Klemmanordnung bezüglich des Grundträgers verschwenkt werden kann, begrenzt ist. Vorzugsweise ist hierbei der Winkel kleiner oder gleich 10°, 5° oder 2°. Insbesondere ist mittels eins der Anschläge oder einer sonstigen konstruktiven Maßnahme eine Rotation der Klemmanordnung bezüglich des Grundträgers verhindert, insbesondere um eine Rotationsachse, die im Wesentlichen senkrecht zu dem Grundträger und/oder der Klemmanordnung verläuft. Somit weist die Klemmkomponente stets im Wesentlichen in die gleiche Richtung, vorzugsweise in einer vertikalen Richtung nach oben, was die Montage der Fensterscheiben erleichtert.

Beispielsweise ist die Klemmanordnung mittels des Kugelgelenks lose an dem Grundträger gelagert, sodass im Wesentlichen eine eigenständige Einstellung des Winkels der Klemmanordnung bezüglich des Grundträgers auf die Fensterscheibe erfolgt. Alternativ weist beispielsweise das Kugelgelenk eine Verspannung auf, mittels derer die Position der Kugel bezüglich der Kugelpfanne und somit der Klemmanordnung bezüglich des Grundträgers festgehalten werden kann. Somit ist es auch möglich, mittels dieses Schienengleiters die Position der Fensterscheibe vorzugeben insbesondere eine Vorspannung bereit zu stellen. Der Grundträger ist zum Beispiel starr an der etwaigen Seilanhängung befestigt, oder diese sind ebenfalls zueinander beweglich, insbesondere parallel zur Führungsschiene, was eine vergleichsweise genaue Justage ermöglicht.

Zweckmäßigerweise umfasst das Kugelgelenk eine Kugelkopfschraube, die bezüglich der Führungsschiene geneigt verläuft. Mit anderen Worten ist die Kugelkopfschraube nicht parallel zur Führungsschiene angeordnet, und die Kugelkopfschraube verläuft vorzugsweise senkrecht zu dieser und/oder in einer horizontalen Ebene. Die Kugelkopfschraube weist endseitig die Kugel auf, die im Montagezustand von der Kugelpfanne zumindest teilweise umgeben ist. Die Kugelkopfschraube ist in ein korrespondierendes Loch eingedreht. Vorzugsweise weist dabei der Grundträger das Loch auf, und die Klemmanordnung umfasst die Kugelpfanne, in die die Kugelkopfschraube eingesetzt ist. In einer alternativen Ausgestaltungsform weist beispielsweise die Klemmanordnung das Loch auf, und der Grundträger umfasst die Kugelpfanne. Aufgrund der Verwendung der Schraube ist es dabei auch möglich, die Kugel von dem Grundträger zur beabstanden und auf diese Weise auch die Klemmanordnung bezüglich des Grundträgers. Mit anderen Worten wird mittels Eindrehens der Kugelkopfschraube in das Loch der Abstand der Klemmanordnung zu dem Grundträger vorgegeben. Somit ist eine zusätzliche Möglichkeit vorhanden, einen seitlichen Versatz der Fensterscheibe bezüglich der Führungsschiene auszugleichen, was eine Einstellbarkeit verbessert. Insbesondere ist mittels der Kugelkopfschraube ein vergleichsweise großer Ausgleich möglich, wobei dies zum Beispiel lediglich vor Abschluss der Endmontage möglich ist. Mittels Veränderung des Abstands der Haltefläche zu dem Klemmträger ist dahingegen zweckmäßigerweise eine Feinjustage möglich, die insbesondere auch nach Abschluss der Montage der Klemmanordnung an dem Grundträger erfolgen kann, und/oder wenn die Fensterscheibe bereits montiert oder zumindest geeignet positioniert ist.

Der Schienengleiter ist im Montagezustand ein Bestandteil einer Fensterheberbaugruppe und hierfür geeignet, insbesondere vorgesehen und eingerichtet. Der Schienengleiter umfasst einen Grundträger zur Lagerung an einer Führungsschiene, insbesondere zur rotationssteifen Lagerung an der Führungsschiene. Hierfür ist der Grundträger, insbesondere vorgesehen und eingerichtet. Beispielsweise ist der Grundträger einstückig. Vorzugsweise jedoch umfasst der Grundträger einen Körper, die zweckmäßiger aus einem Metall erstellt ist. Mittels dessen ist insbesondere einer oder mehrere Clips oder dergleichen gehalten, die aus einem Kunststoff gefertigt sind. Diese sind im Montagezustand in die Führungsschiene eingesetzt. Mittels der Clipse wird eine Beschädigung der Führungsschiene vermieden, und eine Reibung ist verringert. Mittels des Körpers hingegen ist eine vergleichsweise hohe mechanische Integrität des Grundträgers bereitgestellt.

Der Schienengleiter umfasst zweckmäßigerweise eine Seilanhängung, die auch als Nippelkammer bezeichnet wird. Die Nippelkammer dient dem Halten eines Seils, insbesondere eines Draht- oder Kunststoffseils. Die Seilanhängung umfasst vorzugsweise eine oder mehrere Kammern, in die insbesondere eine Hülse einlegbar ist, die auf das Seil aufgesetzt und mit dieser zum Beispiel verpresst ist. Alternativ hierzu umfasst die Seilanhängung beispielsweise eine Klemmung oder ein sonstiges Fixierelement, mittels dessen das Seil an der Seilanhängung gehalten werden kann, sodass ein Ablösen unterbunden ist, zumindest wenn an dem Seil gezogen wird.

Der Schienengleiter umfasst ferner eine Klemmanordnung, die an dem Grundträger angebunden ist. Die Klemmanordnung umfasst einen Klemmträger und eine Druckplatte. Hierbei befinden sich der Klemmträger zweckmäßigerweise auf der dem Grundträger zugewandten Seite, und die Druckplatte ist insbesondere mittels einer Klemmschraube an dem Klemmträger befestigt. Hierbei ist es möglich, mittels der Klemmschraube einen Maximalabstand der Druckplatte zu dem Klemmträger vorzugeben. Die Druckplatte und der Klemmträger sind zueinander parallel angeordnet, und vorzugsweise aus dem gleichen Material erstellt, zum Beispiel aus einem Metall, was eine Robustheit erhöht.

Zwischen dem Klemmträger und der Druckplatte ist eine Klemmkomponente angeordnet, vorzugsweise geklemmt. Die Klemmkomponente wiederum dient dem Halten einer Fensterscheibe und ist hierfür geeignet, insbesondere vorgesehen und eingerichtet. Beispielsweise sind mittels der Klemmkomponente die aufeinander zugewandten Innenseiten des Klemmträger sowie der Druckplatte ausgekleidet, und zwischen diesen ist im Montagezustand die Fensterscheibe angeordnet, sodass eine Sandwichstruktur gebildet ist. Die Klemmkomponente ist dabei vorzugsweise aus einem Kunststoff oder Gummi erstellt, und über diese wird eine Klemmkraft auf die Fensterscheibe aufgebracht, sodass auch die Fensterscheibe zwischen den Klemmträger und die Druckplatte geklemmt ist.

Die Klemmkomponente weist eine Haltefläche auf, die parallel zu der Druckplatte und daher auch zu dem Klemmträger angeordnet ist. Der Abstand der Haltefläche zu dem Klemmträger ist dabei einstellbar. Mit anderen Worten ist der Abstand variabel. Beispielsweise ergibt sich der Abstand dabei aufgrund einer Konfiguration des Schienengleiters. Alternativ hierzu wird der Abstand zweckmäßigerweise manuell eingestellt, und die Position der Haltefläche zu dem Klemmträger kann vorzugsweise fixiert werden, sodass nach Einstellen des bevorzugten Abstands eine weitere Bewegung der Haltefläche bezüglich des Klemmträger unterbunden ist.

Die Erfindung betrifft ferner ein Kraftfahrzeug. Das Kraftfahrzeug ist zum Beispiel landgebunden und beispielsweise ein Lastkraftwagen (Lkw), Bus oder bevorzugt ein Personenkraftwagen (Pkw). Das Kraftfahrzeug weist beispielsweise eine Karosserie auf, die eine Öffnung umfasst. Vorzugsweise weist das Kraftfahrzeug eine Tür auf, die insbesondere derart angeordnet ist, dass mittels dieser die Öffnung abgedeckt werden kann. Zweckmäßigerweise ist hierbei ein Scharnier vorhanden, mittels dessen die Tür an der Karosserie gelagert ist, sodass diese bezüglich der Karosserie bewegt werden kann, beispielsweise verschwenkt und/oder zumindest teilweise entlang einer Längsrichtung bewegt werden kann. Vorzugsweise weist das Kraftfahrzeug mehrere Türen auf, die insbesondere jeweils nach Art einer Seitentür ausgestaltet sind.

Das Kraftfahrzeug weist eine oben beschriebene Fensterheberbaugruppe auf, wobei diese beispielsweise der etwaigen Tür zugeordnet ist. Geeigneterweise weist das Kraftfahrzeug mehrere derartige Fensterheberbaugruppen auf, wobei insbesondere jeder Tür eine der Fensterheberbaugruppen zugeordnet ist. Zum Beispiel weist das Kraftfahrzeug noch weitere Fensterheberbaugruppen auf, die jedoch kein Bestandteil einer Tür des Kraftfahrzeugs sind.

Insbesondere verläuft hierbei die etwaige Drehachse der Klemmanordnung, sofern diese bezüglich des Grundträgers drehbar ist, in Z-Richtung des Fahrzeugkoordinatensystems. Sofern die Klemmanordnung bezüglich des Grundträgers transversal verstellt werden kann, erfolgt dies bevorzugt in Z-Richtung, sodass eine etwaige Seillängung ausgeglichen werden.

Die im Zusammenhang mit der Fensterheberbaugruppe erläuterten Weiterbildungen und Vorteile sind sinngemäß auch auf den Schienengleiter / das Kraftfahrzeug sowie untereinander zu übertragen und umgekehrt.

Nachfolgend werden Ausführungsbeispiele der Erfindung anhand einer Zeichnung näher erläutert. Darin zeigen:
- Fig. 1: schematisch in einer Seitenansicht ein Kraftfahrzeug mit einer Tür, die eine Fensterheberbaugruppe umfasst,
- Fig. 2: schematisch die Fensterheberbaugruppe, die eine Fensterscheibe und Führungsschiene umfasst, an der ein Schienengleiter gelagert ist,
- Fig. 3: schematisch in einer horizontalten Schnittdarstellung unterschiedliche Justagemöglichkeiten der Fensterscheibe,
- Fig. 4: in einer Seitenansicht den an der Führungsschiene gelagerten Schienengleiter,
- Fig. 5: in einer Seitenansicht einen Grundträger des Schienengleiters,
- Fig. 6: in einer Seitenansicht einen Klemmträger des Schienengleiters,
- Fig. 7: in einer Seitenansicht eine alternative Ausgestaltungsform des Klemmträgers,
- Fig. 8: in einer Seitenansicht eine Kugelkopfschraube, und
- Fig. 9: in einer Seitenansicht den Schienengleiter mit dem Klemmträger gemäß Figur 7,
- Fig. 10: eine mittels der Druckplatte, des Klemmträgers sowie eines Klemmteils gebildete Klemmanordnung, mittels derer die Fensterscheibe gehalten ist, wobei die Klemmanordnung zwei Halteflächen umfasst, und
- Fig. 11: in einer Rückansicht ein an dem Klemmträger angebundenes Winkelgetriebe.

Einander entsprechende Teile sind in allen Figuren mit den gleichen Bezugszeichen versehen.

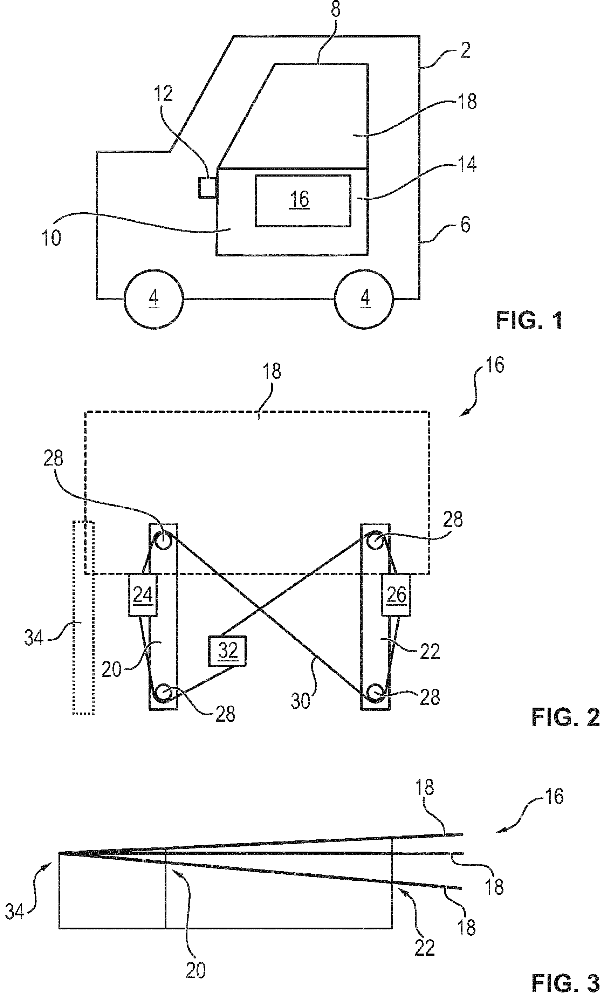

In Figur 1 ist schematisch vereinfacht ein Kraftfahrzeug 2 in Form eines Personenkraftwagens (Pkw) dargestellt. Das Kraftfahrzeug 2 weist mehrere Räder 4 auf, mittels derer ein Kontakt zu einer nicht näher dargestellten Fahrbahn erfolgt. Die Räder 4 sind mittels eines Fahrwerks an einer Karosserie 6 des Kraftfahrzeugs 2 angebunden, die zumindest teilweise aus einem Blech erstellt ist. Die Karosserie 6 weist eine Öffnung 8 auf, die mittels einer Tür 10 abdeckbar ist. Hierfür ist die Tür 10 mittels eines Scharniers 12 an der Karosserie 6 angebunden, wobei aufgrund des Scharniers 12 die Tür 10 bezüglich der Karosserie 6 verschwenkt werden kann, sodass die Öffnung 8 der Karosserie 6 freigegeben oder abgedeckt wird.

Die Tür 10 weist eine Türkarosserie 14 auf, mittels derer die mechanische Integrität der Tür 10 bereitgestellt ist, und die zumindest teilweise aus einem Blech erstellt ist. Die Türkarosserie 14, die ein Bestandteil der Karosserie 6 ist, ist mechanisch an dem Scharnier 12 befestigt und bildet zumindest teilweise eine Außenhaut der Tür 10. Die Tür 10 weist eine Fensterheberbaugruppe 16 auf, die eine Fensterscheibe 18 umfasst. Die Fensterscheibe 18 steht dabei über die Türkarosserie 14 in vertikaler Richtung nach oben über, und wenn die Fensterscheibe 18 und die Tür 10 geschlossen sind, ist mittels der Türkarosserie 14 sowie der Fensterscheibe 18 die vollständige Öffnung 8 ausgefüllt. In diesem Fall liegt die Fensterscheibe 18 an einer nicht näher dargestellten Dichtung an, mittels derer die Öffnung 8 umgeben ist. Mit anderen Worten wird die Fensterscheibe 18 nicht mittels der Türkarosserie 14 umfangsseitig vollständig umgeben, und die Tür 10 ist rahmenlos ausgestaltet. Aufgrund einer Vorspannung der Fensterscheibe 18 ist dabei ein Kraftschluss mit der Dichtung realisiert, sodass ein Eindringen von Feuchtigkeit in einen nicht näher dargestellten Innenraum des Kraftfahrzeugs 2 unterbunden ist.

In Figur 2 ist schematisch vereinfacht die Fensterheberbaugruppe 16 dargestellt, die an der Türkarosserie 14 befestigt ist. Die Fensterheberbaugruppe 16 weist eine Führungsschiene 20 und eine zweite Führungsschiene 22 auf, die aus einem Aluminium oder Stahl erstellt sind, und die bezüglich der Außenhaut der Tür 10 ins Innere des Kraftfahrzeugs 2 versetzt. Auf der Innenseite sind die Führungsschienen 20, 22 mit einer Türverkleidung abgedeckt, sodass diese nicht sichtbar sind. Die beiden Führungsschienen 20, 22 sind zueinander parallel und verlaufen im Wesentlichen in Z-Richtung in einem Fahrzeugkoordinatensystem. Die Führungsschiene 20 ist dabei in Längsrichtung des Kraftfahrzeugs 2 vor der zweiten Führungsschiene 22 angeordnet. Die Führungsschiene 20 ist starr an der Türkarosserie 14 befestigt, wohingegen die zweite Führungsschiene 22, zumindest in geringem Maß, bezüglich einer Vertikalen geneigt werden kann, und/oder in der Horizontalen senkrecht zur Längsrichtung des Kraftfahrzeugs 2 verstellt werden kann.

An der Führungsschiene 20 ist ein Schienengleiter 24 und an der zweiten Führungsschiene 22 ein zweiter Schienengleiter 26 längsbeweglich gelagert, die in dem dargestellten Beispiel auf entgegengesetzten Seiten der jeweiligen Führungsschiene 20, 22 angeordnet sind. An jeder Führungsschiene 20, 22 ist an deren Enden jeweils eine Umlenkrolle 28 drehbar gelagert. Mittels der Umlenkrollen 28 ist überkreuz ein Seil 30 geführt, das mittels eines Stellantriebs 32 angetrieben ist, der eine nicht näher dargestellte Seiltrommel sowie einen Elektromotor umfasst. An dem Seil 30 ist jeder der beiden Schienengleiter 24, 26 im Bereich zwischen den beiden Umlenkrollen 28, die der gleichen Führungsschiene 20, 22 zugeordnet sind, befestigt. Somit wird bei Betrieb des Stellantriebs 32 das Seil 30 bewegt, was zu einer synchronen Bewegung der beiden Schienengleiter 24, 26 entlang der jeweiligen Führungsschiene 20, 22 führt.

Die beiden Schienengleiter 24, 26 sind mit der Fensterscheibe 18 verbunden, die zudem randseitig in eine parallel zu den Führungsschienen 20, 22 verlaufende Führungsnut 34 eingesetzt. Die Führungsnut 34 ist starr an der Türkarosserie 14 befestigt und/oder teilweise mittels dieser gebildet. Wenn der Stellantrieb 32 betrieben wird, wird das Seil 30 bewegt, was zu einem synchronen Bewegen der beiden Schienengleiter 24, 26 an der jeweiligen Führungsschiene 20, 22 führt. Infolgedessen wird die Fensterscheibe 18 verstellt, die entsprechend in der Führungsnut 34 entlang gleitet.

In Figur 3 ist in einer Draufsicht schematisch die Fensterheberbaugruppe 16 bei unterschiedlichen Einstellungen der zweiten Führungsschiene 22 dargestellt. Diese kann in der Horizontalen senkrecht zur Fahrzeuglängsachse verstellt werden, um auf diese Weise den Anpressdruck der Fensterscheibe 18 an der Dichtung um die Öffnung 8 einzustellen. Da die Führungsnut 34 starr an der Türkarosserie 14 befestigt ist, führt dies, wenn auch geringfügig, zu einer Veränderung der Anbindung der Fensterscheibe 18 an dem Schienengleiter 24, der an der Führungsschiene 20 gelagert ist. Dabei ändert sich, je nach Position der zweiten Führungsschiene 22, insbesondere der Winkel, der zwischen der Fensterscheibe 18 und der Führungsschiene 20 gebildet ist. Auch ändert sich der Abstand der Fensterscheibe 18 von der Führungsschiene 20, die starr an der Türkarosserie 14 befestigt ist.

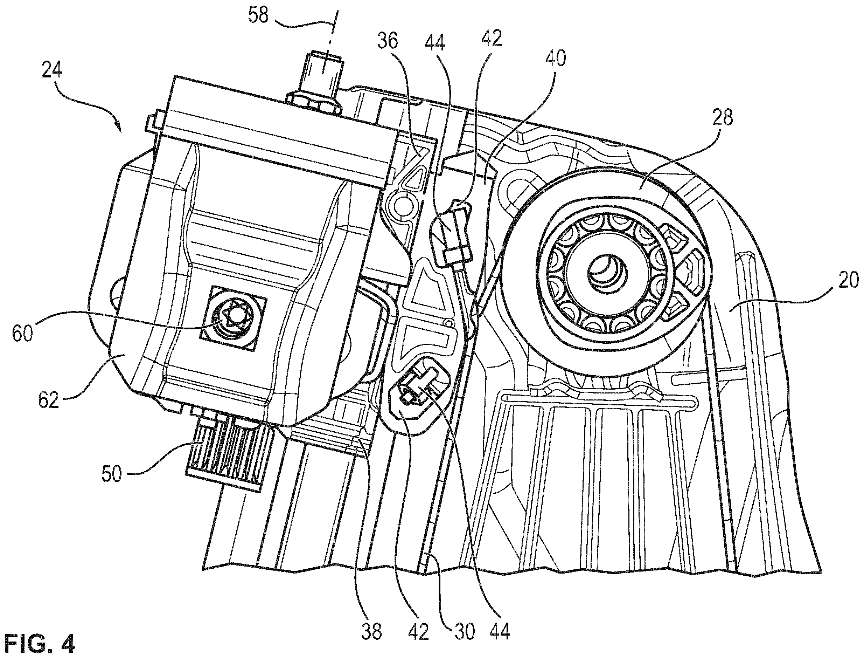

In Figur 4 ist der Schienengleiter 24 dargestellt, der an der Führungsschiene 20 längsbeweglich gelagert ist. Der Schienengleiter 24 weist einen Grundträger 36 auf, der an einem Z-förmig gebogenen Rand der Führungsschiene 20 gelagert ist, wofür der Grundträger 36 entsprechende Strukturen aufweist.

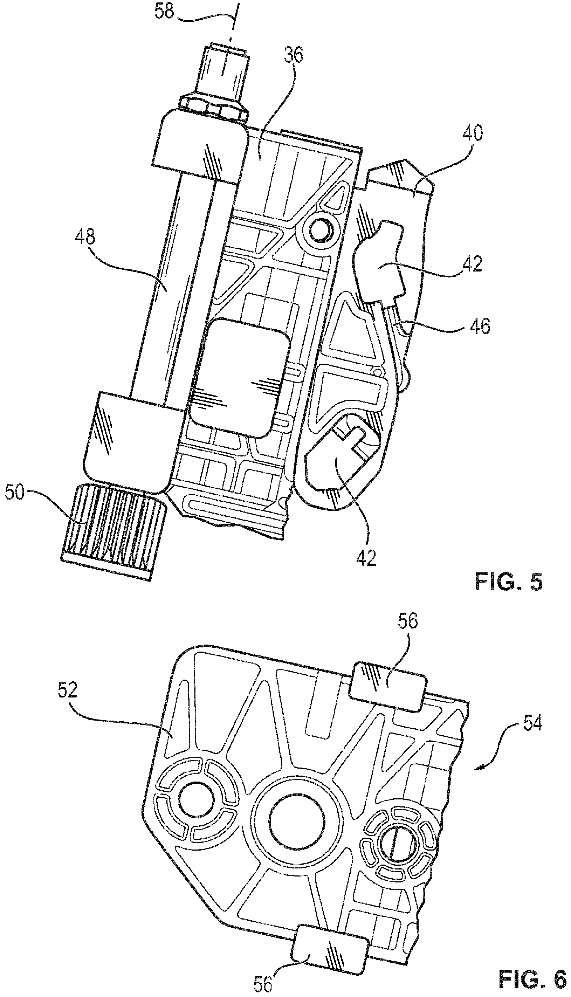

Hierfür umfasst der Grundträger 36, der in Figur 5 in einer Seitenansicht gezeigt ist, einen Körper 38 auf, der aus einem Metall oder einem Kunststoff gefertigt ist. In eine nicht näher gezeigte Aussparung des Körpers 38 ist ein Clip eingesetzt, der aus einem Kunststoff gefertigt ist. Mittels dessen ist die randseitig im Wesentlichen Z-förmig ausgebildete Führungsschiene 20 umgegriffen. Infolgedessen ist der Grundträger 36 rotationssteif an der Führungsschiene 20 gelagert und bezüglich dieser nicht verschwenkbar. Jedoch ist es möglich, den Grundträger 36 entlang der Führungsschiene 20 zu verschieben. Zusammenfassend ist der Grundträger 36 an der Führungsschiene 20 gelagert und in direktem mechanischem Kontakt mit dieser.

An dem Grundträger 36 ist starr eine Seilanhängung 40 befestigt und einstückig mit dem Körper 38. Die Seilanhängung 40 weist mehrere Kammern 42 auf, in die im Montagezustand jeweils eine auf das Seil 30 aufgepresste Hülse 44 eingelegt ist. Auch umfasst die Seilanhängung 40 mehrere Seilführungen 46, in die im Montagezustand das Seil 30 eingelegt ist. Somit ist das Seil 30, mittels der beiden daran befestigten Hülsen 44, an der Seilanhängung 40 gehalten. Mittels Ziehens an dem Seil 30 bei Betrieb des Stellantriebs 32 erfolgt dabei kein Entfernen des Seils 30 von der Seilanhängung 40, da die Seilführungen 44 einen geringeren Durchmesser als die Hülsen 42 aufweisen. Infolgedessen erfolgt eine Kraftübertragung auf die Seilanhängung 40 und somit auf den Grundträger 36, was zu einer Verstellung des Schienengleiters 24 bezüglich der Führungsschiene 20 führt.

Auf der der Seilanhängung 40 gegenüberliegenden Seite des Grundträgers 36 ist an diesem einem Gewindespindel 48 gelagert. An einem Ende der Gewindespindel 48 ist drehfest ein Drehrad 50 befestigt ist. Mittels der Gewindespindel 48 ist ein in Figur 6 dargestellter Klemmträger 52 einer Klemmanordnung 54 an dem Grundträger 36 gelagert. Hierfür weist der Klemmträger 52 entsprechende Halterungen 56 auf, mittels derer nicht näher dargestellte Spindelmuttern drehbar gelagert sind. Der Klemmträger 52 ist mittels der Halterungen 56 auf die Gewindespindel 48 aufgesetzt, sodass mittels Drehens der Gewindespindel 48 die Position der Klemmanordnung 54 bezüglich des Grundträgers 36 parallel zur Führungsschiene 20 verändert wird. Auch ist aufgrund der Ausgestaltung der Halterungen 56 die Klemmanordnung 56 drehbar um eine Drehachse 58 gelagert, die parallel zur Führungsschiene 20 sowie zur Gewindespindel 48 ist. Hierbei ist die Gewindespindel 48 konzentrisch zur Drehachse 58 angeordnet. Mit anderen Worten ist es möglich, den Klemmträger 52 mittels der Halterungen 56 um die Gewindespindel 48, zumindest im begrenzten Maß, zu drehen. An dem Klemmträger 52 ist mittels einer Klemmschraube 60 eine Druckplatte 62 befestigt. Die Druckplatte 62 ist ebenfalls aus Metall erstellt und parallel zu dem Klemmträger 52 angeordnet. Mittels der Klemmschraube 60 ist es möglich, einen Maximalabstand der Druckplatte 62 von dem Klemmträger 52 einzustellen.

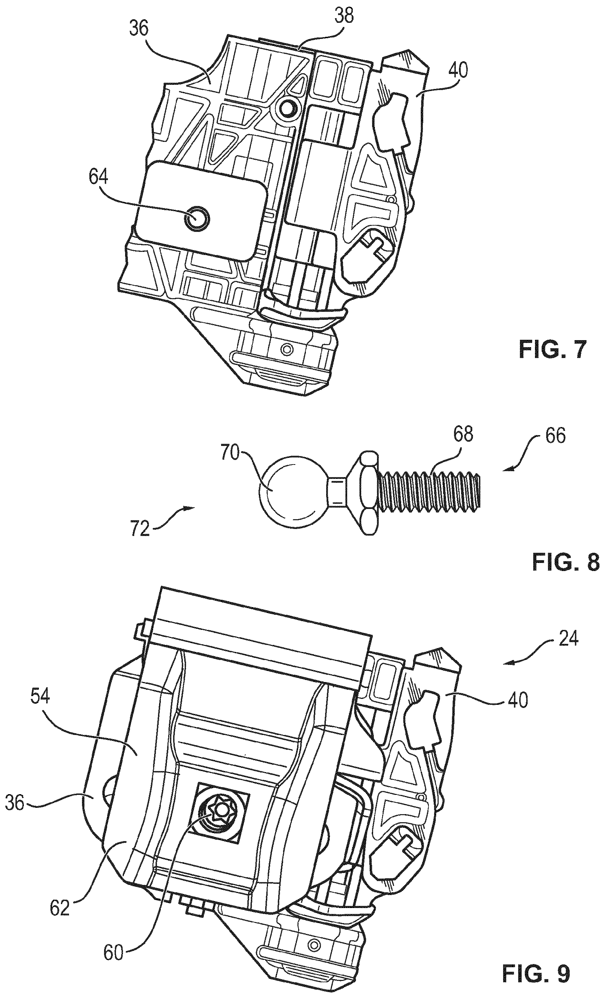

Wie in Figur 8 perspektivisch gezeigt ist zwischen der Druckplatte 58 und dem Klemmträger 50 eine im Wesentlichen u-förmige Klemmkomponente 60 eingesetzt, mittels derer auch jeweils einer der Ränder der Druckplatte 58 als auch des Klemmträgers 50 umgriffen ist. Somit sind die aufeinander zugewandten Seiten der Druckplatte 58 und des Klemmträgers 50 zumindest teilweise mittels der aus einem Gummi erstellten Klemmkomponente 60 ausgekleidet. Mittels der Klemmkomponente 60 ist ein Rand der Fensterscheibe 18 umgegriffen. Somit ist eine Sandwichanordnung aus der Druckplatte 58, der Klemmkomponente 60, der Fensterscheibe 18 sowie dem Klemmträger 50 realisiert, und mittels der Klemmschraube 56 wird die zwischen der Druckplatte 58 auf dem Klemmträger 50 wirkende Klemmkraft eingestellt und somit die Klemmkomponente 60 geklemmt. Mittels der Klemmkomponente 60 wiederum ist die Fensterscheibe 18 gehalten, die über die Klemmkomponente 60 zwischen den Klemmträger 50 und die Druckplatte 58 geklemmt ist.

Zusammenfassend ist somit die Klemmanordnung 54 verstellbar an dem Grundträger 36 gelagert, wobei die Klemmanordnung 54 mittels der Gewindespindel 48 drehbar um die parallel zu der Führungsschiene 20 verlaufende Drehachse 58 bezüglich des Grundträgers 36 gelagert ist. Hierbei ist die Gewindespindel 48 konzentrisch zu der Drehachse 58 angeordnet. Aufgrund der drehbaren Lagerung der Klemmanordnung 54 ist es somit möglich, bei Verstellen der zweiten Führungsschiene 22 den sich im Bereich der Führungsschiene 20 ergebende Winkelversatz der Fensterscheibe 18 auszugleichen, sodass sich darin ergebende Verspannung im Bereich des Schienengleiters 24 verringert sind.

Die Klemmanordnung 54 ist lediglich lose an dem Grundträger 36 drehbar gelagert, sodass sich der erforderliche Winkel im Wesentlichen selbst einstellt. Mittels manueller Betätigung des Drehrads 50 ist es dabei möglich auch möglich, die Klemmanordnung 54 parallel zu der Führungsschiene 20 einzustellen, weswegen insbesondere bei der Positionierung der Hülsen 44 an dem Seil 30 vergrößerte Toleranzen gewählt werden können, wobei bei Montage der Fensterheberbaugruppe 16 trotz der starren Befestigung der Seilanhängung 40 an dem Grundträger 36 die Position der Klemmanordnung 52, nämlich die Höhe in vertikaler Richtung, angepasst werden kann. Aufgrund der starren Befestigung ist dabei eine Robustheit erhöht. Auch ist aufgrund der starren Befestigung des Grundträgers 36 an der Seilanhängung 40 sowie deren Position zueinander bezüglich der Führungsschiene 20 ein Kippmoment verringert, sodass ein Verkanten des Schienengleiters 24 an der Führungsschiene 20 vermieden ist.

In Figur 7 ist eine weitere Ausgestaltungsform des Grundträgers 36 dargestellt, der mittels der nicht näher dargestellten Gewindespindel 48 nunmehr parallel zur Führungsschiene 20 verstellbar bezüglich der Seilanhängung 40 gelagert ist. Dabei befindet sich im Montagezustand die Seilanhängung 40 und die Gewindespindel 48 auf der gleichen Seite bezüglich der Führungsschiene 20. Der Körper 38 weist ein senkrecht zu der Führungsschiene 20 verlaufendes Loch 64 auf, in das im Montagezustand eine in Figur 8 dargestellte Kugelkopfschraube 66 eingedreht ist. Aufgrund der Orientierung des Lochs 64 verläuft dabei die Kugelkopfschraube 66 geneigt bezüglich der Führungsschiene 20.

Die Kugelkopfschraube 66 weist ein Gewinde 68 auf, an dem endseitig eine Kugel 70 angebunden ist. Die Kugel 70 bildet einen Bestandteil eines Kugelgelenks 72, das eine nicht näher dargestellte Kugelpfanne umfasst. Die Kugelpfanne ist ein Bestandteil der Klemmanordnung 54, die somit, wie in Figur 9 dargestellt, mittels des Kugelgelenks 72 schwenkbar an dem Grundträger 36 gelagert ist. Die Ausgestaltung der Druckplatte 62 mit der Klemmschraube 60 entspricht dabei im Wesentlichen der vorhergehenden Klemmanordnung 54. Bei dieser Ausgestaltungsform des Schienengleiters 24 ergibt sich aufgrund der Schwenkbarkeit der Klemmanordnung 54 bezüglich des Grundträgers 36 der Winkelausgleich, wobei dies im Wesentlichen selbstständig erfolgt.

Mittels Eindrehens der Kugelkopfschraube 66 in das Loch 64, also der Auswahl, wieviel sich von dem Gewinde 68 in dem Loch 64 befindet, ist es zudem möglich, den Abstand der Klemmanordnung 54 bezüglich des Grundträgers 36 einzustellen, sodass auch ein seitlicher Versatz der Fensterscheibe 18 kompensiert werden.

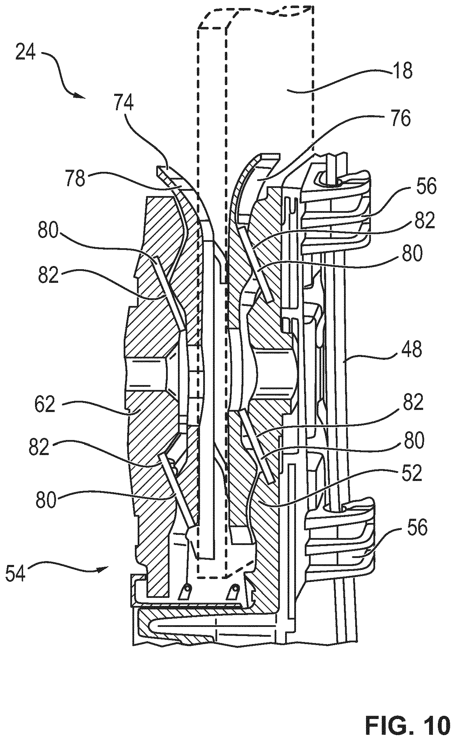

Unabhängig von der Ausgestaltung der Klemmanordnung 54 ist zwischen die Druckplatte 62 und den Klemmträger 52 eine Klemmkomponente 74 geklemmt, die eine Haltefläche 76 und eine zweite Haltefläche 78 aufweist, die zueinander spiegelbildlich sind, und die in Figur 10 in einer vertikalen Schnittdarstellung durch den Schienengleiters 24 gezeigt sind. Die beiden Halteflächen 76, 78 sind hierbei im Wesentlichen eben und parallel zu der Druckplatte 62 sowie dem Klemmträger 52 angeordnet, wobei die in vertikaler Richtung oberen Enden voneinander weggebogen sind. Mittels der beiden Halteflächen 76, 78 sind dabei die Druckplatte 62 sowie der Klemmträger 52 auf den einander zugewandten Seiten ausgekleidet, wobei die beiden Halteflächen 74, 76 in vertikaler Richtung nach oben über diese geringfügig überstehen. Die Haltefläche 76 ist dem Klemmträger 52 und die zweite Haltefläche 78 der Druckplatte 62 zugeordnet, und daran jeweils gelagert.

Zwischen die beiden Haltefläche 76, 78 ist die Fensterscheibe 18 eingelegt und in direktem mechanischem Kontakt mit diesen. Dabei ist die Fensterscheibe 18 parallel zu den beiden Halteflächen 76, 78. Mit anderen Worten ist eine Sandwichstruktur aus der Druckplatte 62, der zweiten Haltefläche 78, der Fensterscheibe 18, der Haltefläche 76 sowie dem Klemmträger 52 gebildet. Folglich ist die Klemmkomponente 74 zwischen die Druckplatte 62 und den Klemmträger 52 geklemmt, und mittels der Klemmkomponente 74 ist die Fensterscheibe 18 gehalten, nämlich geklemmt.

Die Haltefläche 76 ist an dem Klemmträger 52 und zweite Haltefläche 78 an der Druckplatte 62 beweglich gelagert sowie an diesen angebunden. Hierfür sind an jeder Haltefläche 76, 78 jeweils vier Lagerflügel 80 angebunden, die in jeweils einer korrespondierenden Führungsschlitz 82 des Klemmträgers 52 bzw. der Druckplatte 62 eingesetzt und dort verschieblich gelagert sind. Hierbei ist die Ausdehnung der Führungsschlitze 82 größer als der in den jeweiligen Führungsschlitz 82 eingesetzte Teil des jeweiligen Lagerflügels 80. Die beiden Haltefläche 76, 78 sowie die daran angeformten Lagerflügel 80 sind hierbei einstückig aus dem Kunststoff erstellt.

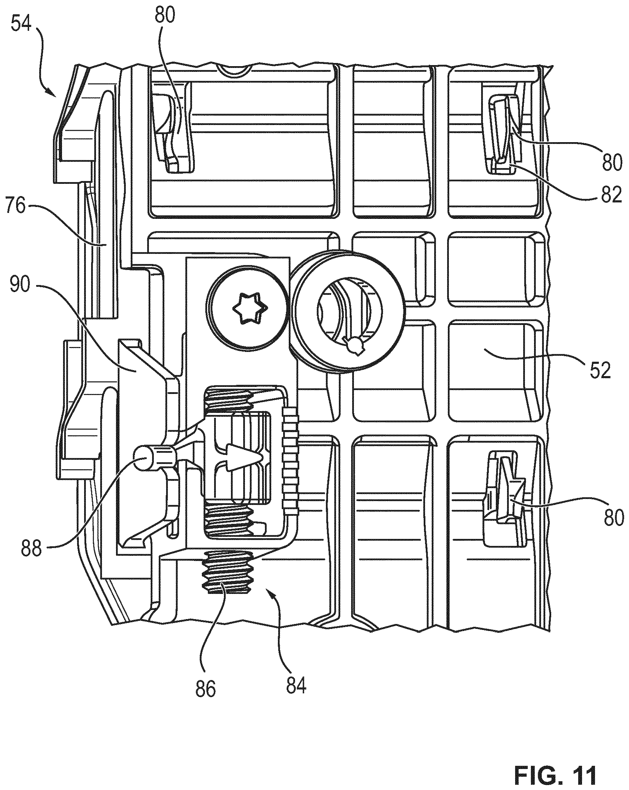

In Figur 11 ist die die Klemmanordnung 54 von der Rückseite, als von Seiten des Grundträgers 36 bzw. der Führungsschiene 20 gezeigt ist. Die Führungsschlitze 82 sind dabei bezüglich der beiden Halteflächen 76, 78 und somit auch bezüglich des Klemmträgers 52 sowie der Druckplatte 62 geneigt und verlaufen zumindest teilweise in vertikaler Richtung. Hierbei schließen die Führungsschlitz 82 mit der Führungsschiene 20 einen Winkel von ca. 20° ein. Zusammenfassend weist somit der Klemmträger 52 und auch die Druckplatte 62 die jeweils vier zugeordneten Führungsschlitze 82 auf, in die jeweils einer der an der Haltefläche 76 bzw. an der zweiten Haltefläche 78 angebundener Lagerflügel 80 eingesetzt ist. Die Führungsschlitze 82 sind in dabei bezüglich der Haltefläche 76 geneigt. Infolgedessen ist es möglich, die Halteflächen 76,78 bezüglich des Klemmträgers 52 sowie der Druckplatte 62 schräg zu verstellen. Somit ist es möglich, den Abstand der Haltefläche 76 zu dem Klemmträger 52 zu verändern.

An dem Klemmträger 52 ist auf der dem Grundträger 36 zugewandten Seite ein Winkelgetriebe 84 angebunden, dass eine Einstellschraube 86 aufweist. Die Einstellschraube 68 wirkt auf einen schwenkbaren Zapfen 88, der in einen Ausleger 90 eingesetzt ist, der an der Haltefläche 76 an der dem Klemmträger 52 zugewandten Seite abgestützt ist.

Mittels Drehung der Einstellschraube 86 wird der Abstand des Freiendes des Zapfens 88 von dem Klemmträger 52 verändert und infolgedessen auch die Position des Auslegers 90. Hierbei ist in die Einstellschraube 86, die sich zwischen dem Klemmträger 52 und dem Grundträger 36 befindet, parallel zu dem Klemmträger 52 sowie zu der Führungsschienen 20 angeordnet und auch parallel zu der Gewindespindel 48. Dabei ist es möglich, die Einstellschraube 86 im montierten Zustand des Schienengleiters 24 zu drehen.

Aufgrund des Winkelgetriebes 84 wirkt die Einstellschraube 86 auf die Haltefläche 76, und mittels diesen wird der Abstand der Haltefläche 76 zu dem Klemmträger 52 vorgegeben, also eingestellt. Wenn das Freiende des Zapfens 88 vergleichsweise weit von dem Klemmträger 20 beabstandet ist, liegt die Haltefläche 76 an dem Klemmträger 76 an. Bei einem Bewegen des Freiendes des Zapfens 88 auf den Klemmträger 20 zu wird die Haltefläche 76 von dem Klemmträger 52 beabstandet, wobei die Lagerflügel 80 in den Führungsschlitzen 82 entlanggleiten. Die zweite Haltefläche 78 ist lediglich lose an der Druckplatte 62 gelagert, und deren Abstand stellt sich insbesondere selbstständig aufgrund der Positionierung der Haltefläche 76 sowie insbesondere aufgrund der Einstellung der Klemmschraube 60 ein. Infolgedessen ist es möglich, mittels der Einstellschraube 86 die Position der Fensterscheibe 18 bezüglich des Klemmträger 52 zu verändern, sodass auch hier ein seitlicher Versatz kompensiert werden kann, und infolgedessen Verspannungen in der Fensterscheibe 18 vermieden werden können.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Karosserie
- 8: Öffnung
- 10: Tür
- 12: Scharnier
- 14: Türkarosserie
- 16: Fensterheberbaugruppe
- 18: Fensterscheibe
- 20: Führungsschiene
- 22: zweite Führungsschiene
- 24: Schienengleiter
- 26: zweiter Schienengleiter
- 28: Umlenkrolle
- 30: Seil
- 32: Stellantrieb
- 34: Führungsnut
- 36: Grundträger
- 38: Körper
- 40: Seilanhängung
- 42: Kammer
- 44: Hülse
- 46: Seilführung
- 48: Gewindespindel
- 50: Drehrad
- 52: Klemmträger
- 54: Klemmanordnung
- 56: Halterung
- 58: Drehachse
- 60: Klemmschraube
- 62: Druckplatte
- 64: Loch
- 66: Kugelkopfschraube
- 68: Gewinde
- 70: Kugel
- 72: Kugelgelenk
- 74: Klemmkomponente
- 76: Haltefläche
- 78: zweite Haltefläche
- 80: Lagerflügel
- 82: Führungsschlitz
- 84: Winkelgetriebe
- 86: Einstellschraube
- 88: Zapfen
- 90: Ausleger

## Patentansprüche

1. Fensterheberbaugruppe (16) eines Kraftfahrzeugs (2), mit einer Führungsschiene (20), an der ein Schienengleiter (24) längsbeweglich gelagert ist, der einen Grundträger (36), der an der Führungsschiene (20) gelagert ist, und eine Klemmanordnung (54) aufweist, die einen an dem Grundträger (36) angebundenen Klemmträger (52) und eine parallel dazu angeordnete Druckplatte (62) umfasst, zwischen denen eine Klemmkomponente (74) geklemmt ist, mittels derer eine Fensterscheibe (18) gehalten ist, wobei die Klemmkomponente (74) eine Haltefläche (76) aufweist, die parallel zu der Druckplatte (62) angeordnet ist, und deren Abstand zu dem Klemmträger (52) einstellbar ist.

2. Fensterheberbaugruppe (16) nach Anspruch 1,
**dadurch gekennzeichnet,**
**dass** die Haltefläche (76) an dem Klemmträger (52) gelagert ist.

3. Fensterheberbaugruppe (16) nach Anspruch 2,
**dadurch gekennzeichnet,**
**dass** an dem Klemmträger (52) eine Einstellschraube (86) gelagert ist, die auf die Haltefläche (76) wirkt.

4. Fensterheberbaugruppe (16) nach Anspruch 3,
**dadurch gekennzeichnet,**
**dass** an dem Klemmträger (52) ein Winkelgetriebe (84) angebunden ist, das die Einstellschraube (86) aufweist, wobei die Einstellschraube (86) parallel zu dem Klemmträger (52) angeordnet ist.

5. Fensterheberbaugruppe (16) nach einem der Ansprüche 2 bis 4,
**dadurch gekennzeichnet,**
**dass** der Klemmträger (52) mehrere Führungsschlitze (82) aufweist, in die jeweils ein an der Haltefläche (76) angebundener Lagerflügel (80) eingesetzt ist, wobei die Führungsschlitze (82) bezüglich der Haltefläche (76) geneigt sind.

6. Fensterheberbaugruppe (16) nach einem der Ansprüche 2 bis 5,
**dadurch gekennzeichnet,**
**dass** an der Druckplatte (62) eine zweite Haltefläche (78) der Klemmkomponente (7480) angebunden ist.

7. Fensterheberbaugruppe (16) nach einem der Ansprüche 1 bis 6,
**dadurch gekennzeichnet,**
**dass** die Klemmanordnung (54) verstellbar an dem Grundträger (36) gelagert ist.

8. Fensterheberbaugruppe (16) nach Anspruch 7,
**dadurch gekennzeichnet,**
**dass** die Klemmanordnung (54) drehbar um eine parallel zu der Führungsschiene (20) verlaufende Drehachse (58) bezüglich des Grundträgers (36) gelagert ist.

9. Fensterheberbaugruppe (16) nach Anspruch 7,
**dadurch gekennzeichnet,**
**dass** die Klemmanordnung (54) mittels eines Kugelgelenks (72) schwenkbar an dem Grundträger (36) gelagert ist.

10. Schienengleiter (24) einer Fensterheberbaugruppe (16), der einen Grundträger (36) zur Lagerung an einer Führungsschiene (20) und eine Klemmanordnung (54) aufweist, die einen an dem Grundträger (36) angebundenen Klemmträger (52) und eine parallel dazu angeordnete Druckplatte (62) umfasst, zwischen denen eine Klemmkomponente (74) zum Halten einer Fensterscheibe (16) angeordnet ist, wobei die Klemmkomponente (74) eine Haltefläche (76) aufweist, die parallel zu der Druckplatte (62) angeordnet ist, und deren Abstand zu dem Klemmträger (52) einstellbar ist.
